# EUROPÄISCHE PATENTSCHRIFT

(11) **EP 3 127 507 B1**
(45) Veröffentlichungstag und Bekanntmachung des Hinweises auf die Patenterteilung: **31.05.2017**
(21) Anmeldenummer: 15002303.4
(22) Anmeldetag: 03.08.2015
(51) Int. Cl.: A61C 13/00

(54) **SINTERROHLING**
SINTER BLANK
ÉBAUCHE FRITTABLE

(43) Veröffentlichungstag der Anmeldung: 08.02.2017
(73) Patentinhaber: Amann Girrbach AG, 6842 Koblach (AT)
(72) Erfinder: Amann, Oliver, 6844 Altach (AT)
(74) Vertreter: Fechner, Thomas

(56) Entgegenhaltungen:
- EP-A2- 2 147 904
- WO-A1-2008/148495
- DE-A1- 19 904 523
- DE-U1-202014 010 392

## Beschreibung

Die vorliegende Erfindung betrifft eine Sinteranordnung gemäß des Oberbegriffs des Patentanspruchs 1.

Zur Herstellung einer Dentalprothese ist es beim Stand der Technik bekannt, Sinterrohlinge im ungesinterten oder teilgesinterten Zustand formgebend zu bearbeiten, um dann durch Sintern bzw. Fertigsintern dieses so vorbereiteten Sinterrohlings die Dentalprothese zu erzeugen. Gegenüber der Bearbeitung von vollständig durchgesintertem Material hat dies den Vorteil, dass das Material vor dem Sintern bzw. im teilgesinterten Zustand deutlich weicher und damit einfacher zu bearbeiten ist. Zu beachten ist in diesem Zusammenhang allerdings, dass beim Sintern eine gewisse Schrumpfung des Sinterrohlings nicht zu vermeiden ist. Vor allem werden die Sinterrohlinge bei den doch sehr hohen Temperaturen während des Sinterprozesses zwischenzeitlich sehr weich und damit anfällig für ungewollte Verformungen.

Die EP 1 154 969 B2 und die DE 199 04 523 A1 schlagen unter anderem ein Verfahren zum dimensionstreuen Sintern von keramischen Formgegenständen vor, bei dem der Produktbereich des Sinterrohlings, aus dem die Dentalprothese entstehen soll, mittels Verbindungsstegen mit einem in der EP 1 154 969 B2 als Träger bezeichneten Sinterhilfskörper verbunden ist, wobei dieser Sinterhilfskörper eine plane also ebene Fläche aufweist, mit der er auf einer rieselförmigen Pulverschüttung steht. Dieser in der Fig. 8 der EP 1 154 969 B2 und der Fig. 3 der DE 199 04 523 A1 gezeigte Aufbau hat den Nachteil, dass der Produktbereich aus dem die Dentalprothese entstehen soll, ausschließlich auf den Verbindungsstegen abgestützt ist, wodurch es beim Sintern schwerkraftbedingt durchaus zur ungewollten Verformung des Sinterrohlings kommen kann.

Die US 3,904,352 A schlägt vor, zu sinternde Körper während es Sinterns auf hitzeresistenten Kugeln abzustützen, damit es beim Schrumpfungsvorgang nicht zu Verformungen kommt. Aus der EP 0 583 620 A1 ist es bekannt, den zu sinternden Gegenstand in einer Schüttung aus einer keramischen Komponente während des Sintervorgangs einzubetten.

Die gattungsfremde DE 20 2014 010 392 U1 zeigt einen Sinterrohling dessen Sinterhilfskörper mittels einer Vielzahl von Gleitnoppen auf einer möglichst als ebene Gleitfläche ausgebildeten Basisfläche gelagert wird.

Aufgabe der Erfindung ist es, die Sinteranordnung der oben genannten Art dahingehend zu verbessern, dass der Sinterrohling möglichst einfach in einer rieselfähigen Schüttung aus Trägerperlen oder Trägerpulver für den anschließenden Sintervorgang positioniert werden kann.

Dies wird gemäß der Erfindung mit einer Sinteranordnung gemäß Patentanspruch 1 erreicht.

Durch die gewölbte Auflagefläche am Sinterhilfskörper kann der Sinterrohling sehr einfach und mit wenig Aufwand vor dem Sintervorgang in der rieselfähigen Schüttung aus Trägerperlen und/oder Trägerpulver vorpositioniert werden. Es ist hierzu aufgrund der gewölbten Auflagefläche keine besondere Vorbereitung der rieselfähigen Schüttung bzw. ihrer Oberflächentopografie vor dem Einsetzen bzw. Auflegen des Sinterrohlings notwendig. Mittels der gewölbten Auflagefläche des Sinterhilfskörpers kann der Sinterrohling zusammen mit dem Produktbereich mit wenig Aufwand und vor allem unter sehr geringer Kraftaufwendung auf die Schüttung aufgelegt bzw. in diese leicht eingedrückt werden. Durch die gewölbte Auflagefläche hat der Sinterhilfskörper bei diesem Vorgang eine sehr geringe Verdrängung von Trägerperlen bzw. Trägerpulver. Durch die Tatsache, dass wenig Kraft aufgewendet werden muss, ist auch die Gefahr verringert, dass sich der Sinterrohling bei diesem Vorgang ungewollt verformt. Der Sinterrohling der erfindungsgemäßen Sinteranordnung kann auf einer relativ ebenen Oberfläche der rieselfähigen Schüttung aufgelegt werden. Die Gefahr der Ausbildung von instabilen Gefällen innerhalb der rieselfähigen Schüttung, welche in einer nicht ausreichenden Abstützung des Sinterrohlings während des Sintervorgangs resultieren können, ist deutlich reduziert bzw. gebannt. Während des Sintervorgangs selbst ist durch die gewölbte Auflagefläche des Sinterhilfskörpers eine sehr geringe Reibung zwischen dem Sinterhilfskörper und der rieselfähigen Schüttung sichergestellt, was wiederum für ein verzugsfreies Schrumpfen des Sinterrohlings während des Sintervorgangs günstig ist.

Darüber hinaus kann durch die gewölbte Auflagefläche des Sinterhilfskörpers auch eine bessere Zugänglichkeit zu den Verbindungsstegen geschaffen werden, was das Abtrennen der Verbindungsstege vom Produktbereich im Anschluss an den Sinterprozess vereinfacht.

Durch die gewölbte Ausbildung der Auflagefläche des Sinterhilfskörpers ist es auch möglich, den Sinterhilfskörper relativ klein bzw. flach und im Vergleich zum Produktbereich mit vergleichbar großem Volumen auszubilden, wodurch die Gefahr von thermischen Spannungen beim Aufheizen und Abkühlen des Sinterrohlings reduziert ist. Weiters kann durch die erfindungsgemäße Maßnahme auch ein idealisierter Übergang zwischen dem Sinterhilfskörper und den Verbindungsstegen erzielt werden, um so Verbindungsfrakturen während des Sinterprozesses in Folge von thermischen Spannungen durch zu große Volumensunterschiede im jeweiligen Übergangsbereich zu vermeiden.

Der Sinterrohling könnte auch als Grünling bezeichnet werden. Es handelt sich jedenfalls um einen Gegenstand der erst durch den nachfolgenden Sinterprozess vollständig aushärtet. Der Sinterrohling kann vollständig ungesintert oder aber auch teil- oder angesintert sein. Der Produktbereich des Sinterrohlings ist der Anteil, aus dem durch den Sintervorgang und gegebenenfalls notwendige Nachbearbeitungsschritte die Dentalprothese entsteht. Bei dem Sinterhilfskörper und bei den Verbindungsstegen handelt es sich um eine Hilfskonstruktion bzw. Verstrebung, welche einen Verzug des Sinterrohlings und insbesondere des Produktbereichs während des Sintervorgangs vermeiden soll. Diese Hilfskonstruktion, also der Verbund aus Sinterhilfskörper und Verbindungsstegen, ist nach dem Sintervorgang zu entfernen. Dies erfolgt günstigerweise durch Abtrennen der Verbindungsstege vom Produktbereich. Der Sinterhilfskörper ist vorzugsweise ausschließlich mittels der Verbindungsstege mit dem Produktbereich verbunden.

Die gewölbte Auflagefläche des Sinterhilfskörpers dient der Auflage auf einer rieselfähigen Schüttung während des Sintervorgangs. Die Wölbung der Auflagefläche ist günstigerweise vor allem in den Randbereichen des Sinterhilfskörpers ausgebildet. Bei der gewölbten Auflagefläche handelt es sich günstigerweise um einen einzigen gewölbten Bereich. Der Sinterhilfskörper weist also günstigerweise genau eine gewölbte Auflagefläche auf. Diese erstreckt sich vorzugsweise über die gesamte während des Sintervorgangs der rieselfähigen Schüttung zugewendete Unterseite des Sinterhilfskörpers. Vor allem im zentralen Bereich des Sinterhilfskörpers kann die gewölbte Auflagefläche aber auch flache bzw. mehr oder weniger ebene Teilbereiche aufweisen, ohne dass dies zwingend die Funktion beeinträchtigt. Die Wölbung der gewölbten Auflagefläche ist günstigerweise jedenfalls ohne Kanten und Ecken ausgebildet. Bevorzugt ist vorgesehen, dass der Sinterhilfskörper zumindest in seinem von der gewölbten Auflagefläche begrenzten Bereich zumindest einen konvexen Querschnitt aufweist. Vorzugsweise ist der Querschnitt vollständig konvex. Besonders bevorzugt weist der gesamte Sinterhilfskörper einen entsprechend konvexen Querschnitt auf. Bei besonders bevorzugten Varianten der Erfindung ist vorgesehen, dass der Sinterhilfskörper zumindest in seinem von der gewölbten Auflagefläche begrenzten Bereich, vorzugsweise der gesamte Sinterhilfskörper, in zumindest zwei zueinander orthogonalen Raumrichtungen, vorzugsweise vollständig, konvexe Querschnitte aufweist.

Bevorzugt weist der Sinterhilfskörper in seinem zentralen Bereich eine größere Dicke auf als in seinen, vorzugsweise allen, randlichen Bereichen. Die Verbindungsstege münden günstigerweise ausschließlich in den randlichen Bereichen in den Sinterhilfskörper. Die maximale Dicke des Sinterhilfskörpers ist bevorzugt kleiner oder gleich dem 6- fachen, vorzugsweise kleiner oder gleich dem 4- fachen, der minimalen Dicke der Verbindungsstege. Alle genannten Dicken werden dabei günstigerweise parallel zueinander, besonders bevorzugt normal zur durch den Produktbereich gebildeten Okklusionsebene gemessen.

Der Sinterhilfskörper weist in bevorzugten Varianten zumindest in seinem von der gewölbten Auflagefläche begrenzten Bereich zumindest einen konvex linsenförmigen Querschnitt auf. In besonders bevorzugten Ausgestaltungsformen gilt dies wiederum für Querschnitte in zumindest zwei zueinander orthogonalen Raumrichtungen. Besonders bevorzugt gilt dies für den gesamten Sinterhilfskörper.

Bei dem Produktbereich handelt es sich günstigerweise um einen Zahnbogen mit einer Abfolge von mehreren untereinander verbundenen Prothesenzahnrohlingen. Der Sinterhilfskörper verbindet dabei günstigerweise über jeweils einen Verbindungssteg zumindest zwei der Prothesenzahnrohlinge dieses Zahnbogens. Die Prothesenzahnrohlinge der Abfolge sind bevorzugt jeweils paarweise miteinander verbunden. Damit ist gemeint, dass jeder Prothesenzahnrohling jeweils mit seinem oder seinen benachbart angeordneten Prothesenzahnrohling(en) verbunden ist. Es kann sich beim Produktbereich um einen vollständigen Zahnbogen für den Ober- oder Unterkiefer mit entsprechend allen hierfür benötigten Prothesenzahnrohlingen handeln. Der Zahnbogen kann aber auch eine Teilprothese sein, welcher nicht unbedingt alle für den Ober- oder Unterkiefer benötigten Prothesenzahnrohlinge umfasst. Der Zahnbogen ist in seiner Krümmung günstigerweise dem natürlichen Verlauf der Zähne im Ober- oder Unterkiefer nachempfunden. Man könnte in diesem Zusammenhang auch vereinfacht von einem U-förmigen oder hufeisenförmigen Verlauf des Zahnbogens sprechen. Günstigerweise umschließt der Zahnbogen teilweise bzw. bereichsweise einen Innenraum und der Sinterhilfskörper und/oder die Verbindungsstege sind günstigerweise zumindest teilweise, vorzugweise vollständig, in diesem Innenraum angeordnet.

Grundsätzlich kann der Sinterrohling aus allen zu sinterbaren und zur Herstellung von Dentalprothesen geeigneten Ausgangsstoffen bestehen. Es kann sich also auch um metallisches Material handeln. Besonders bevorzugt weist ein erfindungsgemäßer Sinterrohling allerdings keramisches Material, vorzugsweise Zirkonoxid auf. Besonders bevorzugt besteht der Sinterrohling vollständig aus solchem keramischen Material, vorzugsweise Zirkonoxid.

Der Produktbereich und der Sinterhilfskörper und die Verbindungsstege bestehen günstigerweise aus demselben Material und sind einstückig miteinander ausgebildet. Der gesamte Sinterrohling ist günstigerweise ein einstückiger Körper. Besonders bevorzugt ist der Sinterrohling aus einem einzigen Materialblock herausgearbeitet. Durch die Ausbildung des Sinterrohlings aus einem Monomaterial schrumpfen der Produktbereich, der Sinterhilfskörper und die Verbindungsstege während des Sintervorgangs im selben Ausmaß, sodass es hierdurch nicht zu einem Verzug des Sinterrohlings und insbesondere des Produktbereichs während des Sinterns kommen kann. Es wird darauf hingewiesen, dass es sich, wenn man von einem Material spricht, auch um eine, vorzugsweise in sich homogene, Materialmischung handeln kann.

Durch das Aufliegen sowohl des Produktbereichs als auch der gewölbten Auflagefläche des Sinterhilfskörpers wird das Gewicht des Produktbereichs wie auch des Sinterhilfskörpers jeweils direkt von der darunter liegenden Schüttung getragen. Das Gewicht des Produktbereichs lastet somit nicht auf dem Sinterhilfskörper und umgekehrt. Auch dies ist für ein verzugsfreies Sintern günstig. Geeignete Trägerperlen bzw. geeignetes Trägerpulver sind beim Stand der Technik bekannt. Sie werden auch als Sinterperlen oder Sinterpulver bezeichnet. Es handelt sich in bevorzugten Ausgestaltungsformen um ein inertes keramisches Material, welches den Sinterrohling beim Sintervorgang nicht beeinträchtigt und auch nicht an diesem anhaftet. Von Trägerperlen redet man, solange man die einzelnen Perlen mit dem Auge noch erkennen kann. Bei einer feineren Körnung spricht man von einem Trägerpulver. Die Körner des Trägerpulvers bzw. der Trägerperlen sind vorzugsweise gerundet ausgebildet. Es kann sich, muss aber nicht, um eine kugelrunde Form handeln.

Zusätzlich betrifft die Erfindung auch ein Sinterverfahren, bei dem ein Sinterrohling einer erfindungsgemäßen Sinteranordnung während des Sinterns auf einer rieselfähigen Schüttung aus Trägerperlen und/oder einem Trägerpulver gelagert wird, wobei sowohl der Produktbereich als auch die gewölbte Auflagefläche des Sinterhilfskörpers auf der Schüttung aufliegen und/oder in die Schüttung, vorzugsweise nur teilweise, eingebettet sind. Für das Sinterverfahren gilt das oben für die entsprechende Sinteranordnung Gesagte, insbesondere was das Aufliegen sowohl des Produktbereichs als auch der gewölbten Auflagefläche des Sinterhilfskörpers auf der Schüttung betrifft.

In bevorzugten Varianten werden erfindungsgemäße Sinterrohlinge digital konstruiert. In diesem Zusammenhang kann ein Computerprogramm zur Konstruktion eines Sinterrohlings einer erfindungsgemäßen Sinteranordnung mittels einer digitalen Datenverarbeitungseinrichtung vorgesehen sein. Bei der Programmierung eines solchen Computerprogramms werden bevorzugt die oben genannten Merkmale des Sinterrohlings berücksichtigt und umgesetzt. Die reine Programmierarbeit erfolgt gemäß des Standes der Technik. Man könnte auch von einem Verfahren zur Konstruktion eines erfindungsgemäßen Sinterrohlings sprechen, welches mittels eines Computerprogramms auf einer digitalen Datenverarbeitungseinrichtung ausgeführt wird.

Auf Basis eines mit einem solchen Computerprogramm konstruierten Sinterrohlings sieht ein Verfahren zur Herstellung dieses Sinterrohlings vor, dass von der digitalen Datenverarbeitungseinrichtung bei der Konstruktion des Sinterrohlings zumindest ein Datensatz erzeugt wird und anhand dieses Datensatzes mittels zumindest eines materialaufbauenden Verfahrens und/oder eines materialabtragenden Verfahrens, vorzugsweise eines Fräsverfahrens, der Sinterrohling erzeugt wird. Geeignete materialaufbauende wie auch materialabtragende Verfahren sind beim Stand der Technik bekannt, ebenso wie die digitale Ansteuerung entsprechender Einrichtungen zur Umsetzung dieser Verfahren. Für materialaufbauende Verfahren können z.B. 3D-Drucker und dergleichen eingesetzt werden. Materialabtragende Verfahren können mittels Fräs- und/oder Schleifeinrichtungen durchgeführt werden.

Weitere Merkmale und Einzelheiten bevorzugter Ausgestaltungsformen der Erfindung werden nachfolgend anhand der Figurenbeschreibung erläutert. Es zeigen:
Fig. 1 eine perspektivische Ansicht von schräg unten auf einen Sinterrohling einer erfindungsgemäßen Sinteranordnung;
Fig. 2 eine erfindungsgemäße Sinteranordnung mit diesem Sinterrohling;
Fig. 3 einen Vertikalschnitt durch die Sinteranordnung gemäß Fig. 2;
Fig. 4 und 5 symbolhafte Darstellungen zu Herstellungsverfahren für Sinterrohlinge.

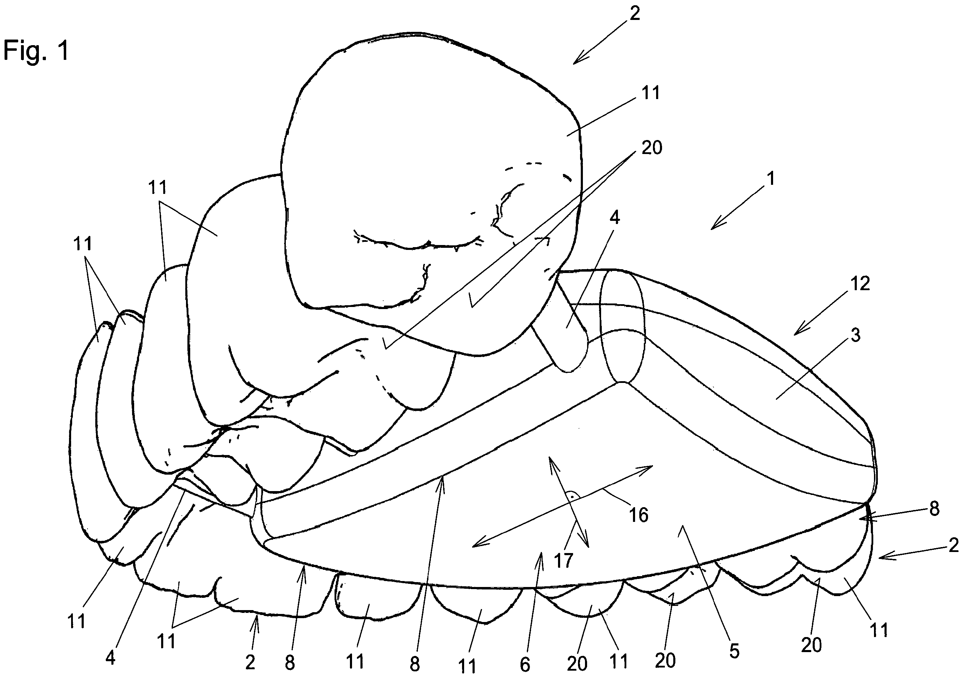

Fig. 1 zeigt beispielhaft eine Ausgestaltungsform eines Sinterrohlings 1 einer erfindungsgemäßen Sinteranordnung von schräg unten. Dieser weist einen in Form eines Zahnbogens ausgebildeten Produktbereich 2 mit einer Abfolge von Prothesenzahnrohlingen 11 auf. Dieser Zahnbogen aus Prothesenzahnrohlingen 11 umschließt einen Innenraum 12. In diesem sind der Sinterhilfskörper 3 und die Verbindungsstege 4 angeordnet. Der Sinterhilfskörper 3 ist über die Verbindungsstege 4 mit einzelnen der Prothesenzahnrohlinge 11 des Produktbereichs 2 verbunden.

Bei dem Sinterhilfskörper 3 und den Verbindungsstegen 4 handelt es sich um eine reine Hilfskonstruktion, welche beim Sintervorgang einen Verzug des Produktbereichs 2 verhindern soll. Besonders hilfreich ist diese Hilfskonstruktion dann, wenn Vollprothesen wie z.B. ganze Zahnbögen oder relativ große Teilprothesen mittels Sintern hergestellt werden sollen. Nach dem Sintern bzw. Fertigsintern wird die Hilfskonstruktion bestehend aus dem Sinterhilfskörper 3 und den Verbindungsstegen 4 vom Produktbereich abgetrennt.

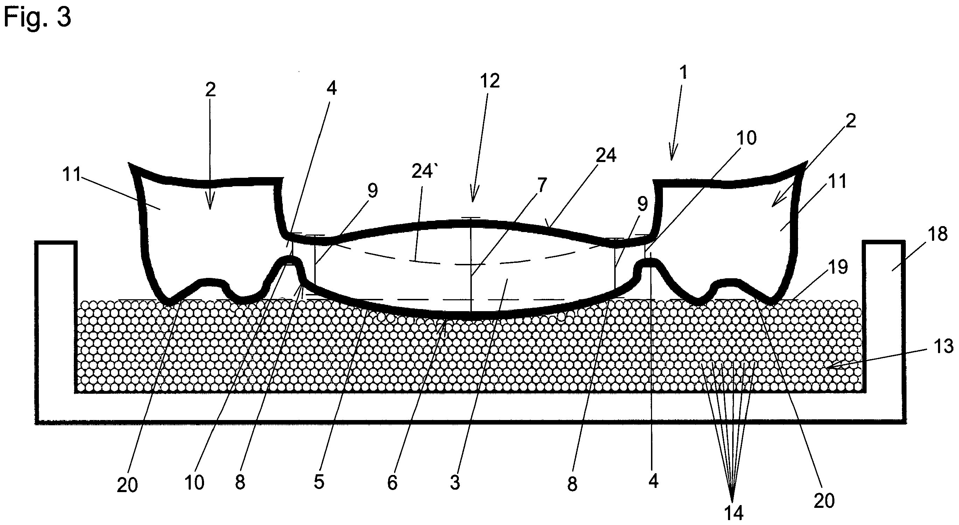

Gut zu sehen ist auch die erfindungsgemäß gewölbte Auflagefläche 5 des Sinterhilfskörpers 3. Diese befindet sich auf derselben Seite des Sinterrohlings 1, wie die Kauflächen 20 der Prothesenzahnrohlinge 11. Der Sinterhilfskörper 3 weist, wie auch in anderen bevorzugten Ausgestaltungsformen, eine einzige, also genau eine gewölbte Auflagefläche 5 auf. Diese erstreckt sich über die gesamte, beim Sintervorgang zur rieselfähigen Schüttung 13 zeigende Seite des Sinterhilfskörpers 3. Im gezeigten Ausführungsbeispiel weist der gesamte Sinterhilfskörper 3 in den zwei zueinander orthogonalen Raumrichtungen 16 und 17 vollständig konvexe Querschnitte auf. Insbesondere gilt dies für den Sinterhilfskörper 3 zumindest in seinem von der gewölbten Auflagefläche 5 begrenzten Bereich. Die in Fig. 1 nicht sichtbare aber in Fig. 3 eingezeichnete, der gewölbten Auflagefläche 5 gegenüberliegende Oberfläche 24 des Sinterhilfskörpers 3 könnte gegebenenfalls auch anders ausgeformt werden, ohne dass dadurch die eingangs genannten Vorteile und technischen Effekte der gewölbt ausgeformten Auflagefläche 5 des Sinterhilfskörpers 3 beeinträchtigt würden. Um dies beispielhaft zu veranschaulichen ist eine, der Auflagefläche 5 gegenüberliegende alternative Ausbildung der Oberfläche 24' in Fig. 3 gestrichelt eingezeichnet. Die Oberfläche 24' ist nicht wie die Oberfläche 24 konvex nach außen sondern konkav nach innen gewölbt, wobei dies natürlich nur ein Beispiel von vielen Möglichkeiten ist.

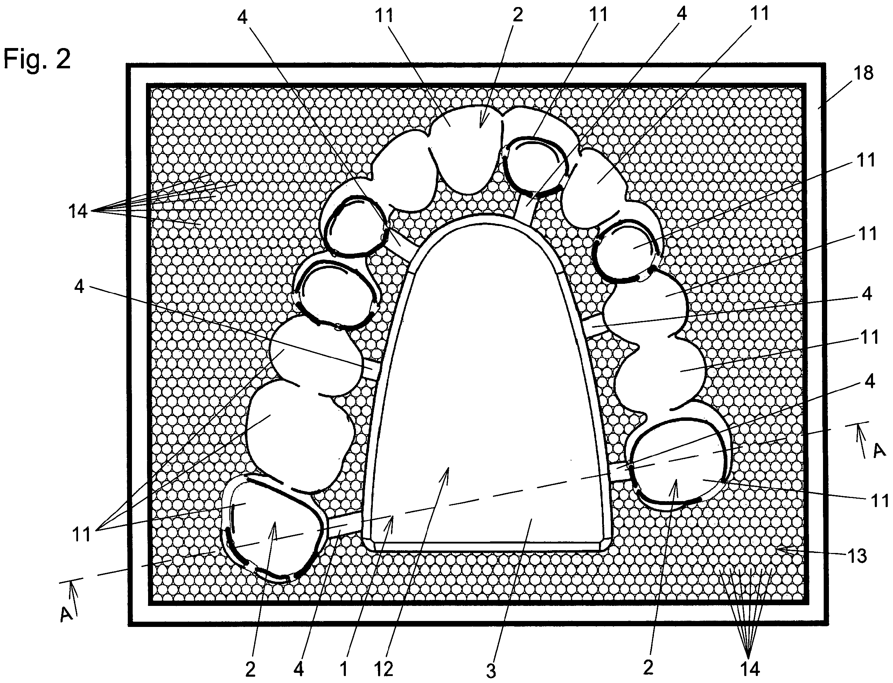

Fig. 2 zeigt eine Draufsicht auf eine erfindungsgemäße Sinteranordnung, bei der der Sinterrohling 3 in einer rieselfähigen Schüttung 13 aus Trägerperlen 14 gelagert ist, wobei sowohl der Produktbereich 2 als auch die gewölbte Auflagefläche 5 des Sinterhilfskörpers 3 auf der Schüttung 13 aufliegen und/oder in die Schüttung 13, vorzugsweise nur teilweise, eingebettet sind. Die rieselfähige Schüttung 13 ist im gezeigten Ausführungsbeispiel in einer Sinterschale 18 angeordnet. Die Sinterperlen 14 liegen lose aneinander an bzw. aufeinander. Sie verhalten sich beim Sinterprozess gegenüber dem Sinterrohling 1 inert. Das bedeutet, dass sie an ihm weder anhaften noch den Sinterrohling 1 in einer anderen Art und Weise negativ beeinflussen.

Der Sinterrohling 1 ist, wie in anderen bevorzugten Ausgestaltungsformen auch, hier als einstückiger Körper ausgebildet. Der Produktbereich 2, der Sinterhilfskörper 3 und die Verbindungsstege 4 bestehen einstückig aus demselben Material. Besonders bevorzugt werden solche Sinterrohlinge 1 aus einem einzigen Materialblock 22 herausgearbeitet. Fig. 3 zeigt einen schematisch dargestellten Vertikalschnitt entlang der Schnittlinie AA durch die Sinteranordnung gemäß Fig. 2. Hier ist gut zu sehen, dass der Sinterkörper 3 in diesem Ausführungsbeispiel einen konvex linsenförmigen Querschnitt aufweist. Die Verbindungsstege 4 münden in den randlichen Bereichen 8 des Sinterhilfskörpers 3 in den Sinterhilfskörper 3. Der Sinterhilfskörper 3 weist im zentralen Bereich 6 eine größere Dicke 7 auf, als in den randlichen Bereichen 8. Zwischen dem Sinterhilfskörper 3, den Verbindungsstegen 4 und dem Produktbereich 2 bzw. den jeweiligen Prothesenzahnrohlingen 11 ist jeweils ein möglichst gerundeter stetiger Übergang vorgesehen, wodurch Spannungen während des Sintervorgangs besonders gut vermieden werden. Die maximale Dicke 7 des Sinterhilfskörpers 3 ist günstigerweise kleiner oder gleich dem 6-fachen, vorzugsweise kleiner oder gleich dem 4- fachen, der minimalen Dicke 10 der Verbindungsstege 4. Alle Dicken 7, 9 und 10 werden günstigerweise normal auf die in Fig. 3 gezeigte Okklusionsebene 9 gemessen, welche durch den Produktbereich 2 vorgegeben ist. Diese Dicken werden also parallel zueinander gemessen. In Fig. 3 ist auch gut zu sehen, dass bei der erfindungsgemäßen Sinteranordnung sowohl der Produktbereich 2 als auch die Auflagefläche 4 des Sinterhilfskörpers 3 auf der Schüttung 13 aufliegen. Durch die gewölbte Auflagefläche 5 reicht es zur optimalen Lagerung des Sinterrohlings 1 in der Schüttung 13 aus, den Sinterrohling 1 auf eine mehr oder weniger ebene Oberfläche der Schüttung 13 aufzulegen und diesen sanft einzudrücken. Hierdurch kommt es weder zu einem Verzug des Sinterrohlings 1 noch bilden sich große Aufhäufungen von Sinterperlen 14 zwischen dem Produktbereich 2 und dem Sinterhilfskörper 3, was ebenfalls für ein störungs- und verzugsfreies Sintern günstig ist.

Die in Fig. 2 und 3 beispielhaft gezeigte Sinteranordnung kann in dieser Konstellation, wie beim Stand der Technik an sich bekannt, in einem gewöhnlichen Sinterofen gesintert werden. Nach dem Sintervorgang und dem Auskühlen des dann fertig gesinterten Sinterrohlings 1 werden die Verbindungsstege 4 zwischen dem Produktbereich 2 und dem Sinterhilfskörper 3 durchtrennt. Durch die gewölbte Ausbildung der Auflagefläche 5 sind die Verbindungsstege 4 für diesen Abtrennvorgang besonders gut zugänglich. Gegebenenfalls noch vorhandene Überreste der Verbindungsstege 4 können nach dem Abtrennen der Verbindungsstege 4 von den jeweiligen Prothesenzahnrohlingen 11 bzw. von den durch das Sintern daraus entstandenen Prothesenzähnen abgeschliffen werden.

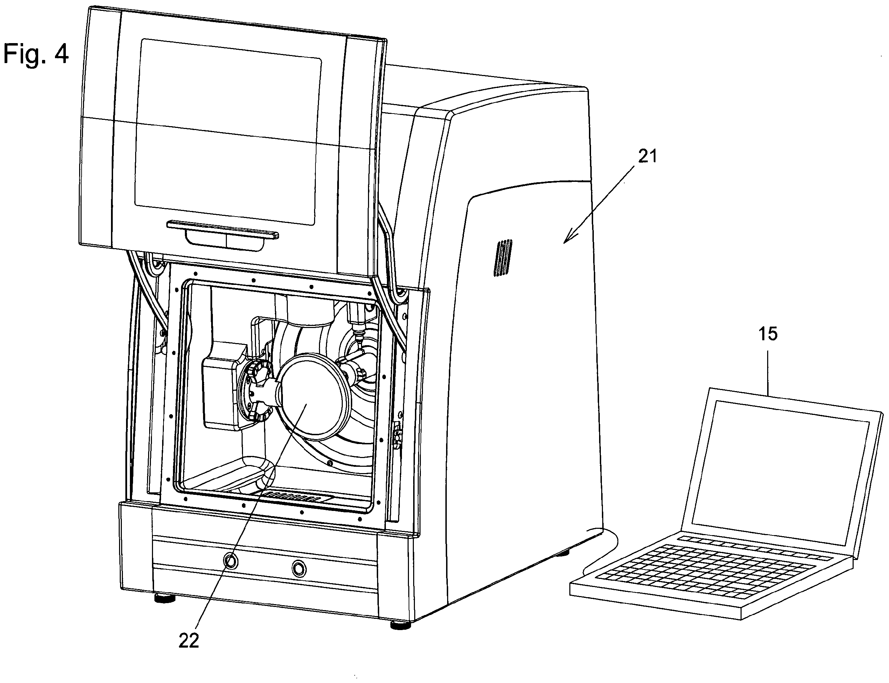

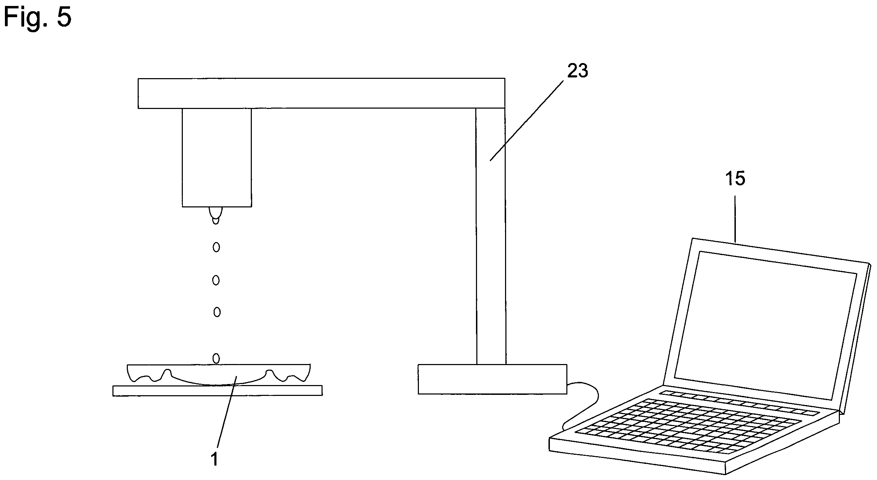

Wie eingangs bereits erläutert, kann ein Computerprogramm zur Konstruktion zumindest eines Sinterrohlings 1 einer erfindungsgemäßen Sinteranordnung auf einer digitalen Datenverarbeitungseinrichtung 15 vorgesehen sein, wie dies schematisiert in den Fig. 4 und 5 dargestellt ist. Der bei dieser Konstruktion des Sinterrohlings 1 erzeugte Datensatz bzw. die dabei erzeugten Datensätze kann bzw. können dazu genutzt werden, den Sinterrohling 1 dann herzustellen. Hierzu können z.B. materialabtragende Verfahren herangezogen werden. Fig. 4 zeigt hierzu beispielhaft eine mittels des genannten Datensatzes von der Datenverarbeitungseinrichtung 15 angesteuerte Fräseinrichtung 21, welche den Materialblock 22 mittels Fräsen so lange bearbeitet, bis der Sinterrohling 1 ausgebildet ist. Eine erfindungsgemäße Variante mit einem materialaufbauenden Verfahren ist stark schematisiert und beispielhaft in Fig. 5 gezeigt. Hier steuert die Datenverarbeitungseinrichtung 15 unter Berücksichtigung des oder der entsprechenden Datensätze einen 3D-Drucker 23 an, sodass der Sinterrohling 1 so mittels eines materialaufbauenden Verfahrens hergestellt werden kann. Entsprechende Fräseinrichtungen 21 und 3D-Drucker 23 sind beim Stand der Technik grundsätzlich ebenso bekannt, wie ihre digitale Ansteuerung mittels Datenverarbeitungseinrichtung 15, sodass hierauf nicht weiter im Detail eingegangen werden muss.

### Legende

### zu den Hinweisziffern:

- 1: Sinterrohling
- 2: Produktbereich
- 3: Sinterhilfskörper
- 4: Verbindungssteg
- 5: Auflagefläche
- 6: zentraler Bereich
- 7: Dicke
- 8: randlicher Bereich
- 9: Dicke
- 10: minimale Dicke
- 11: Prothesenzahnrohling
- 12: Innenraum
- 13: Schüttung
- 14: Trägerperle
- 15: Datenverarbeitungseinrichtung
- 16: Raumrichtung
- 17: Raumrichtung
- 18: Sinterschale
- 19: Okklusionsebene
- 20: Kaufläche
- 21: Fräseinrichtung
- 22: Materialblock
- 23: 3D-Drucker
- 24: Oberfläche
- 24': Oberfläche

## Patentansprüche

1. Sinteranordnung mit einer rieselfähigen Schüttung (13) aus Trägerperlen (14) und/oder einem Trägerpulver und einem Sinterrohling (1) zur Herstellung einer Dentalprothese, wobei der Sinterrohling (1) zumindest einen Produktbereich (2), aus dem die Dentalprothese entsteht, und zur Verstrebung des Produktbereichs (2) zumindest einen Sinterhilfskörper (3) und Verbindungsstege (4) aufweist, wobei der Sinterhilfskörper (3) mittels der Verbindungsstege (4) mit dem Produktbereich (2) verbunden ist, wobei der Sinterrohling (1) auf der Schüttung (13) gelagert ist, **dadurch gekennzeichnet, dass** der Sinterhilfskörper (3) eine, vorzugsweise genau eine, zumindest bereichsweise, vorzugsweise vollständig, gewölbte Auflagefläche (5) aufweist und wobei sowohl der Produktbereich (2) als auch die gewölbte Auflagefläche (5) des Sinterhilfskörpers (3) auf der Schüttung (13) aufliegen und/oder in die Schüttung (13), vorzugsweise nur teilweise, eingebettet sind.

2. Sinteranordnung nach Anspruch 1, **dadurch gekennzeichnet, dass** der Sinterhilfskörper (3) zumindest in seinem von der gewölbten Auflagefläche (5) begrenzten Bereich, vorzugsweise der gesamte Sinterhilfskörper (3), zumindest einen, vorzugsweise vollständig, konvexen Querschnitt aufweist.

3. Sinteranordnung nach Anspruch 1 oder 2, **dadurch gekennzeichnet, dass** der Sinterhilfskörper (3) zumindest in seinem von der gewölbten Auflagefläche (5) begrenzten Bereich, vorzugsweise der gesamte Sinterhilfskörper (3), in zumindest zwei zueinander orthogonalen Raumrichtungen (16, 17), vorzugsweise vollständig, konvexe Querschnitte aufweist.

4. Sinteranordnung nach einem der Ansprüche 1 bis 3, **dadurch gekennzeichnet, dass** der Sinterhilfskörper (3) in einem zentralen Bereich (6) eine größere Dicke (7) aufweist als in den, vorzugsweise allen, randlichen Bereichen (8).

5. Sinteranordnung nach einem der Ansprüche 1 bis 4, **dadurch gekennzeichnet, dass** die Verbindungsstege (4) in, ggfls. den, randlichen Bereichen (8) in den Sinterhilfskörper (3) münden.

6. Sinteranordnung nach einem der Ansprüche 1 bis 5, **dadurch gekennzeichnet, dass** der Sinterhilfskörper (3) zumindest in seinem von der gewölbten Auflagefläche (5) begrenzten Bereich, vorzugsweise der gesamte Sinterhilfskörper (3), zumindest einen konvex linsenförmigen Querschnitt aufweist.

7. Sinteranordnung nach einem der Ansprüche 1 bis 6, **dadurch gekennzeichnet, dass** die maximale Dicke (7) des Sinterhilfskörpers (3) kleiner oder gleich dem 6- fachen, vorzugsweise kleiner oder gleich dem 4- fachen, der minimalen Dicke (1C) der Verbindungsstege (4) ist.

8. Sinteranordnung nach einem der Ansprüche 1 bis 7, **dadurch gekennzeichnet, dass** der Produktbereich (2) ein, vorzugsweise U-förmiger und/oder vollständiger, Zahnbogen mit einer Abfolge von mehreren untereinander, vorzugsweise paarweise, verbundenen Prothesenzahnrohlingen (11) ist und der Sinterhilfskörper (3) über jeweils einen Verbindungssteg (4) zumindest zwei der Prothesenzahnrohlinge (11) dieses Zahnbogens miteinander verbindet.

9. Sinteranordnung nach Anspruch 8, **dadurch gekennzeichnet, dass** der Zahnbogen einen Innenraum (12) teilweise umschließt und der Sinterhilfskörper (3) und/oder die Verbindungsstege (4) zumindest teilweise, vorzugsweise vollständig, im Innenraum (12) angeordnet ist bzw. sind.

10. Sinteranordnung nach einem der Ansprüche 1 bis 9, **dadurch gekennzeichnet, dass** der Sinterrohling (1) ein keramisches Material, vorzugsweise Zirkonoxyd, aufweist oder daraus vollständig besteht.

11. Sinteranordnung nach einem der Ansprüche 1 bis 10, **dadurch gekennzeichnet, dass** der gesamte Sinterrohling (1) ein einstückiger Körper ist und/oder aus einem einzigen Materialblock (22) herausgearbeitet ist und/oder dass der Produktbereich (2) und der Sinterhilfskörper (3) und die Verbindungsstege (4) einstückig aus demselben Material bestehen.

12. Sinterverfahren, **dadurch gekennzeichnet, dass** der Sinterrohling (1) der Sinteranordnung nach einem der Ansprüche 1 bis 11 während des Sinterns auf einer rieselfähigen Schüttung (13) aus Trägerperlen (14) und/oder einem Trägerpulver gelagert wird, wobei sowohl der Produktbereich (2) als auch die gewölbte Auflagefläche (5) des Sinterhilfskörpers (3) auf der Schüttung (13) aufliegen und/oder in die Schüttung (13), vorzugsweise nur teilweise, eingebettet sind.

## Claims

1. Sintering arrangement comprising a free-flowing granular bed (13) of support beads (14) and/or a support powder and a sinter blank (1) for the manufacture of a dental prosthesis, wherein the sinter blank (1) comprises at least one product area (2) from which the dental prothesis is produced and at least one auxiliary sintering body (3) and connecting webs (4) for bracing the product area (2), wherein the auxiliary sintering body (3) is connected to the product area (2) by means of the connecting webs (4), wherein the sinter blank (1) is supported on the granular bed (13), **characterised in that** the auxiliary sintering body (3) has one, preferably precisely one, at least in some areas, preferably completely, curved bearing surface (5), and wherein both the product area (2) and also the curved bearing surface (5) of the auxiliary sintering body (3) lie on the granular bed (13) and/or are embedded, preferably only partially, in the granular bed (13).

2. Sintering arrangement according to claim 1, **characterised in that** the auxiliary sintering body (3), at least in its region limited by the curved bearing surface (5), preferably the entire auxiliary sintering body (3), has at least one, preferably completely, convex cross section.

3. Sintering arrangement according to claim 1 or 2, **characterised in that** the auxiliary sintering body (3), at least in its region limited by the curved bearing surface (5), preferably the entire auxiliary sintering body (3), has, preferably completely, convex cross sections in at least two spatial directions (16, 17) oriented at right angles to one another.

4. Sintering arrangement according to one of the claims 1 to 3, **characterised in that** the auxiliary sintering body (3) has a greater thickness (7) in a central region (6) than in, preferably all, the marginal regions (8).

5. Sintering arrangement according to one of the claims 1 to 4, **characterised in that** the connecting webs (4) terminate in the auxiliary sintering body (3) in the marginal regions (8).

6. Sintering arrangement according to one of the claims 1 to 5, **characterised in that** the auxiliary sintering body (3), at least in its region limited by the curved bearing surface (5), preferably the entire auxiliary sintering body (3), has at least one convex lenticular cross section.

7. Sintering arrangement according to one of the claims 1 to 6, **characterised in that** the maximum thickness (7) of the auxiliary sintering body (3) is less than or equal to 6 times, preferably less than or equal to 4 times the minimum thickness (10) of the connecting webs (4).

8. Sintering arrangement according to one of the claims 1 to 7, **characterised in that** the product area (2) is a, preferably U-formed and/or complete, dental arch with a succession of several prosthetic tooth blanks (11) which are connected with one another, preferably pairwise, and the auxiliary sintering body (3) connects at least two of the prosthetic tooth blanks (11) of this dental arch with one another in each case via a connecting web (4).

9. Sintering arrangement according to claim 8, **characterised in that** the dental arch partially surrounds an inner space (12) and the auxiliary sintering body (3) and/or the connecting webs (4) is or are arranged at least partially, preferably completely, in the inner space (12).

10. Sintering arrangement according to one of the claims 1 to 9, **characterised in that** the sinter blank (1) contains or consists entirely of a ceramic material, preferably zirconium oxide.

11. Sintering arrangement according to one of the claims 1 to 10, **characterised in that** the entire sinter blank (1) is a single-piece body and/or is formed from a single block of material (22) and/or that the product area (2) and the auxiliary sintering body (3) and the connecting webs (4) are formed in a single piece out of the same material.

12. Sintering method, **characterised in that** the sinter blank (1) of the sintering arrangement according to one of the claims 1 to 11 is supported during sintering on a free-flowing granular bed (13) of support beads (14) and/or a support powder, wherein both the product area (2) and also the curved bearing surface (5) of the auxiliary sintering body (3) lie on the granular bed (13) and/or are embedded, preferably only partially, in the granular bed (13).

## Revendications

1. Ensemble de frittage comprenant un lit fluide (13) de perles support (14) et/ou d'une poudre support et une ébauche frittée (1) pour la fabrication d'une prothèse dentaire, l'ébauche frittée (1) comprenant au moins une zone de produit (2) à partir de laquelle la prothèse dentaire est obtenue, et comprenant, pour l'entretoisement de la zone de produit (2), au moins un corps auxiliaire fritté (3) et des éléments de liaison (4), le corps auxiliaire fritté (3) étant relié à la zone de produit (2) au moyen des éléments de liaison (4), l'ébauche frittée (1) étant entreposée sur le lit (13), **caractérisé en ce que** le corps auxiliaire fritté (3) comprend une, de préférence exactement une, surface d'appui (5) au moins en partie courbée, de préférence entièrement courbée, et aussi bien la zone de produit (2) que la surface d'appui courbée (5) du corps auxiliaire fritté (3) reposent sur le lit (13) et/ou sont insérées, de préférence seulement en partie, dans le lit (13).

2. Ensemble de frittage selon la revendication 1, **caractérisé en ce que** le corps auxiliaire fritté (3) présente au moins dans sa zone délimitée par la surface d'appui courbée (5), de préférence dans sa totalité, au moins une section transversale convexe, de préférence entièrement convexe.

3. Ensemble de frittage selon la revendication 1 ou 2, **caractérisé en ce que** le corps auxiliaire fritté (3) présente au moins dans sa zone délimitée par la surface d'appui courbée (5), de préférence dans sa totalité, des sections transversales convexes, de préférence entièrement convexes, dans au moins deux directions spatiales (16, 17) perpendiculaires l'une à l'autre.

4. Ensemble de frittage selon l'une des revendications 1 à 3, **caractérisé en ce que** le corps auxiliaire fritté (3) présente dans une zone centrale (6) une épaisseur (7) plus importante que dans les zones de bord (8), de préférence plus importante que dans l'ensemble de celles-ci.

5. Ensemble de frittage selon l'une des revendications 1 à 4, **caractérisé en ce que** les éléments de liaison (4) débouchent dans le corps auxiliaire fritté (3) dans des zones de bord (8), le cas échéant dans les zones de bord (8).

6. Ensemble de frittage selon l'une des revendications 1 à 5, **caractérisé en ce que** le corps auxiliaire fritté (3) présente au moins dans sa zone délimitée par la surface d'appui courbée (5), de préférence dans sa totalité, au moins une section transversale en forme de lentille convexe.

7. Ensemble de frittage selon l'une des revendications 1 à 6, **caractérisé en ce que** l'épaisseur maximale (7) du corps auxiliaire fritté (3) est inférieure ou égale au sextuple, de préférence inférieure ou égale au quadruple, de l'épaisseur minimale (10) des éléments de liaison (4).

8. Ensemble de frittage selon l'une des revendications 1 à 7, **caractérisé en ce que** la zone de produit (2) est une arcade dentaire, de préférence en forme de U et/ou intégrale, comprenant une succession de plusieurs ébauches de prothèse dentaire (11) reliées entre elles, de préférence par paire, et le corps auxiliaire fritté (3) relie entre elles au moins deux des ébauches de prothèse dentaire (11) de cette arcade dentaire par l'intermédiaire chacune d'un élément de liaison (4).

9. Ensemble de frittage selon la revendication 8, **caractérisé en ce que** l'arcade dentaire entoure en partie un espace intérieur (12), et le corps auxiliaire fritté (3) et/ou les éléments de liaison (4) est ou sont disposé(s) au moins en partie, de préférence en totalité, dans l'espace intérieur (12).

10. Ensemble de frittage selon l'une des revendications 1 à 9, **caractérisé en ce que** l'ébauche frittée (1) comprend un matériau céramique, de préférence de l'oxyde de zirconium, ou en est entièrement constituée.

11. Ensemble de frittage selon l'une des revendications 1 à 10, **caractérisé en ce que** la totalité de l'ébauche frittée (1) est un corps d'une seule pièce et/ou est façonnée à partir d'un seul bloc de matériau (22), et/ou **en ce que** la zone de produit (2) et le corps auxiliaire fritté (3) et les éléments de liaison (4) sont constitués d'une seule pièce du même matériau.

12. Procédé de frittage, **caractérisé en ce que** l'ébauche frittée (1) de l'ensemble de frittage selon l'une des revendications 1 à 11 est entreposé pendant le frittage sur un lit fluide (13) de perles support (14) et/ou d'une poudre support, aussi bien la zone de produit (2) que la surface d'appui courbée (5) du corps auxiliaire fritté (3) reposant sur le lit (13) et/ou étant insérées, de préférence seulement en partie, dans le lit (13).
